# EUROPEAN PATENT SPECIFICATION

(11) **EP 2 656 312 B1**
(45) Date of publication and mention of the grant of the patent: **28.10.2015**
(21) Application number: 11805481.6
(22) Date of filing: 20.12.2011
(51) Int. Cl.: G06T 3/40

(54) **METHOD FOR PRODUCING A PANORAMIC IMAGE ON THE BASIS OF A VIDEO SEQUENCE AND IMPLEMENTATION APPARATUS.**
VERFAHREN ZUR ERZEUGUNG EINES PANORAMABILDES AUF BASIS EINER VIDEOSEQUENZ UND IMPLEMENTIERUNGSVORRICHTUNG
PROCÉDÉ POUR PRODUIRE UNE IMAGE PANORAMIQUE À PARTIR D'UNE SÉQUENCE VIDÉO ET APPAREIL DE MISE EN OEUVRE

(30) Priority: 20.12.2010 FR 1060838
(43) Date of publication of application: 30.10.2013
(73) Proprietor: ST-Ericsson SA, 1228 Plan-les-Ouates (CH)
(72) Inventor: AUBERGER, Stéphane, F-93160 Noisy Le Grand (FR); HANUS, Nicolas, F-73160 Vimines (FR)
(74) Representative: Zapalowicz, Francis
(86) International application number: PCT/EP2011/073323
(87) International publication number: WO 2012/084885

(56) References cited:
- US-A1- 2009 040 292
- US-B1- 6 813 391
- WENYI ZHAO: "Flexible Image Blending for Image Mosaicing with Reduced Artifacts", INTERNATIONAL JOURNAL OF PATTERN RECOGNITION AND ARTIFICIAL INTELLIGENCE (IJPRAI), WORLD SCIENTIFIC PUBLISHING, SI, vol. 20, no. 4, 1 January 2006 (2006-01-01), pages 609-628, XP009142069,
- DAVID L MILGRAM: "Computer Methods for Creating Photomosaics", IEEE TRANSACTIONS ON COMPUTERS, IEEE SERVICE CENTER, LOS ALAMITOS, CA, US, vol. 24, 1 November 1975 (1975-11-01), pages 1113-1119, XP007918755,
- YINGEN XIONG ET AL: "Fast panorama stitching for high-quality panoramic images on mobile phones", IEEE TRANSACTIONS ON CONSUMER ELECTRONICS, IEEE SERVICE CENTER, NEW YORK, NY, US, vol. 56, no. 2, 1 May 2010 (2010-05-01), pages 298-306, XP011312667,
- SEONG JONG HA ET AL: "Panoramic mosaic system for mobile devices", IMAGE PROCESSING, 2008. ICIP 2008. 15TH IEEE INTERNATIONAL CONFERENCE, IEEE, PISCATAWAY, NJ, USA, 12 October 2008 (2008-10-12), pages 1388-1391, XP031398921,
- SEONG JONG HA ET AL: "Embedded Panoramic Mosaic System Using Auto-Shot Interface", IEEE TRANSACTIONS ON CONSUMER ELECTRONICS, IEEE SERVICE CENTER, NEW YORK, NY, US, vol. 54, no. 1, 1 February 2008 (2008-02-01), pages 16-24, XP011225497,

## Description

The invention relates to the production of a panoramic image on the basis of consecutive images extracted from a video sequence, and more particularly to the merging of a target image of a video sequence with a panoramic pan.

A panoramic image is an image possessing an exceptionally wide field. These panoramic images may be created with a panoramic photographic apparatus comprising objectives with exceptionally wide field, or else on the basis of the recording of a succession of images by a picture-taking apparatus by swivelling the latter in relation to a horizontal axis. They can thus be aligned on the basis of a digital photographic apparatus and of software making it possible to assemble several pictures, or else on the basis of a video sequence recorded by a video camera on the basis of which use is made of images of the video sequence assembled.

In the case of a digital photographic apparatus in a photographic capture mode, several successive pictures are taken with a photographic apparatus fixed on an axis and which turns between each picture, causing two consecutive pictures to overlap. Software thereafter makes it possible to assemble the various images obtained. The field of view is widened artificially in this way.

In the case of producing a panoramic image on the basis of a video sequence, a video sequence is firstly recorded by carrying out a panoramic pan, that is to say by performing a swivel motion about a fixed axis. The images of the video sequence are, for example, recorded at a frequency of 25 images per second. The images thus captured during the video sequence will serve to construct a panoramic photographic image.

To construct a panoramic image on the basis of a video sequence, it is necessary firstly to estimate the displacement existing between two successive images. This estimation of displacement makes it possible to determine a displacement vector of an image with respect to a previous image. This displacement vector then makes it possible to correctly align the two successive images within a panoramic image. Estimation of displacement is well known and is based on a method of agreement between the blocks defining the image, which works on the basis of the luminance of the various input images.

Once the image undergoing analysis has been well aligned, a part of the target image is merged with the panoramic image already formed on the basis of the previous images.

There is then a compromise to be made between the production of a progressive transition and the preservation of the precision of the image in the zone of merging of the target image with the panoramic image.

Indeed, the larger the merging zone, the easier it is to introduce a progressive variation of the luminance without any sudden luminance variation appearing in the final panoramic image. However, also, the larger the merging zone, the more significant is the number of pixels implicated in a correction of their luminance value, and the more significant will be the mean number of correction undergone by each pixel in the course of the process for carrying out the pan. The precision of definition a pixel decreases in an inversely proportional manner with the number of images participating in the definition of a pixel, since all of these images are not necessarily all perfectly aligned with one another.

Thus, absence of displacement or too slow a displacement of the video camera capturing the panoramic pan can also bring about a decrease in the precision of definition, since the same pixels of the final panoramic image will be corrected a significant number of times corresponding to each image merge.

The article from Wenyi Zhao entitled "Flexible Image Blending for Image Mosaicing with Reduced Artifacts" published in the International Journal of Pattern Recognition and Artificial Intelligence, SI, vol.20, no.4, January 2006, pages 609-628, XP009142069 shows a progressive transition among the images blended into a panoramic image by means of a linear ramp weighting function.

The article from David L. Milgram entitled "Computer Methods for Creating Photomosaics" published in IEEE transactions on computers, IEEE Service Center, vol.24, 1 November 1975, pages 1113-1119, XP007918755 depicts a similar technique than in the previous article, the technique allowing overlapping images to be combined into a phtotomosaic in which the visual impact of the introduced seam has been minimized.

The invention is aimed at solving these problems by ensuring good definition of the final panoramic image while having progressive transitions between the images and joins which are not visible.

According to one aspect of the invention, there is proposed, in one mode of implementation, a method for producing a panoramic image on the basis of a video sequence, comprising a merging of a target image of a video sequence with a panoramic pan comprising images of the said video sequence.

The method comprises:
- an evaluation of the luminance difference between the target image and the last image used for the panoramic pan;
- a determination of the size of the zone of merging of the two images as a function of the evaluated luminance difference;
- a correction of the luminance of the pixels situated in the merging zone.

The size of the merging zone can advantageously be fixed at a lower value if the evaluated luminance difference is lower than a first threshold.

The size of the merging zone can also be fixed at a higher value if the evaluated luminance difference is higher than a second threshold.

Preferably, the size of the merging zone varies linearly with the evaluated luminance difference if the evaluated luminance difference lies between the first and the second threshold.

The method can advantageously comprise an estimation of the displacement between the target image and the last image used for the panoramic pan, and a selection of the target image if the estimated displacement is greater than a displacement threshold.

According to another aspect of the invention, there is proposed, in one embodiment, an apparatus furnished with digital picture-taking means comprising means for merging a target image of a video sequence with a panoramic pan comprising images of the said video sequence.

The merging means comprise:
- evaluation means able to evaluate the luminance difference between the target image and the last image used for the panoramic pan;
- determination means able to determine the size of the zone of merging of the two images as a function of the evaluated luminance difference;
- correction means able to correct the luminance of the pixels situated in the merging zone.

Advantageously, the determination means can comprise first comparison means able to compare the evaluated luminance difference with a first threshold.

The determination means can advantageously comprise second comparison means able to compare the evaluated luminance difference with a second threshold.

Preferably, the determination means also comprise means of linear variation able to make the size of the merging zone vary linearly with the evaluated luminance difference if the evaluated luminance difference lies between the first and the second thresholds.

Advantageously, the merging means can comprise means for estimating the displacement able to estimate the displacement between the target image and the last image used for the panoramic pan, and selection means able to select the target image if the estimated displacement is greater than a displacement threshold.

Other advantages and characteristics of the invention will be apparent on examining the detailed description of wholly non-limiting embodiments and modes of implementation, and the appended drawings in which:
- Figure 1 represents a flowchart of a mode of implementation of a method for producing a panoramic pan on the basis of a video sequence; and
- Figure 2 represents an apparatus comprising digital photography means comprising means for merging a target image of a video sequence with a panoramic pan.

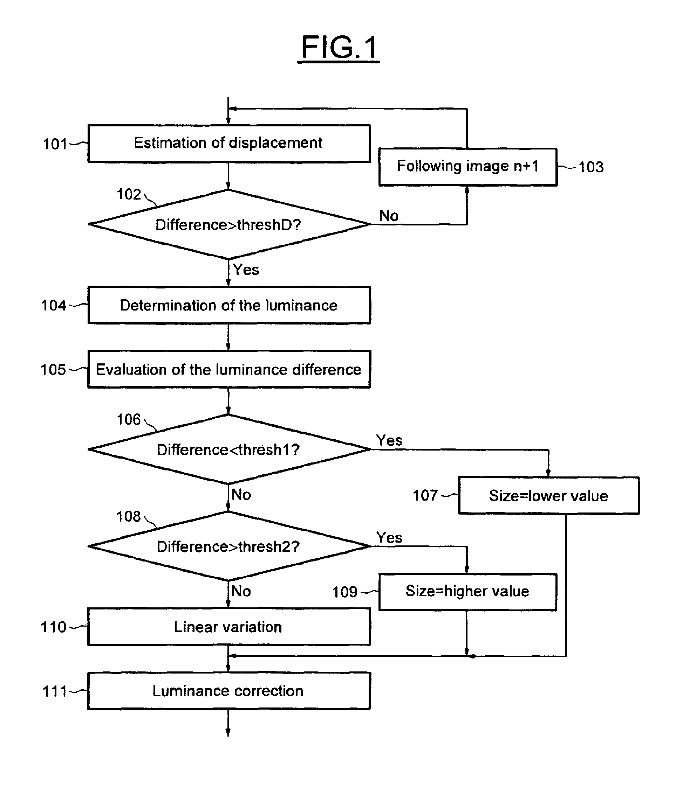

In Figure 1 is represented a flowchart of a mode of implementation of a method for producing a panoramic image of a video sequence comprising a merging of a target image of a video sequence with a panoramic pan comprising images of the said video sequence.

Initially, the displacement existing between a target image n and the last image which was merged with the panoramic image is estimated in an initial step 101. The said last merged image can correspond to the image n-1 preceding the target image n.

In a following step 102, the displacement thus estimated is compared with a displacement threshold (ThreshD). If the estimated displacement is not greater than the displacement threshold (ThreshD), then the target image n is not taken into account for the panoramic pan, and the test will be redone with the following image n+1.

This initial approach makes it possible to check that during the video sequence, the panoramic displacement has not been too slow or indeed even halted. By not taking into account the images whose displacement is too small with respect to the last image merged with the panoramic pan, the pixels of the panoramic image are thus prevented from undergoing too many corrections and too much merging, and from then losing definition.

If on the other hand the displacement estimated in the initial step 101 is greater than the displacement threshold (ThreshD), then the luminance of the target image n as well as the luminance of the last image merged with the panoramic pan are determined subsequently in a step 104. In Figure 1, the last merged image corresponds to the image n-1.

In a following step 105, the difference existing between the luminance of the target image n and the luminance of the image n-1 is evaluated on the basis of the determinations of luminance, carried out in the previous step 104.

In a step 106, the difference thus evaluated is compared a first time with a first threshold (Thresh1). If the said difference is lower than the first threshold (Thresh1), the size of the merging zone of the target image n is fixed at a lower value in a step 107, before correcting the luminance of the merging zone in a final step 111.

On the other hand, if the said difference is higher than the first threshold (Thresh1), then a new comparison is carried out in a following step 108. This time the difference is compared with a second threshold (Thresh2). If the difference is higher than the second threshold (Thresh2), then the size of the merging zone of the target image n is fixed at a higher value in a step 109, before correcting the luminance of the merging zone in the final step 111.

On the other hand, if the said difference is greater than the second threshold (Thresh2), in a following step 110, the size of the merging zone is varied linearly as a function of the evaluated luminance difference.

Once the size of the merging zone has been thus determined, a correction of the luminance is carried out in a final step 111. The luminance correction is carried out in a linear manner within the merging zone. In this way, the luminance of the merging zone is progressively modified in such a way that there is no abrupt change of luminance between the panoramic image and the merged target image n.

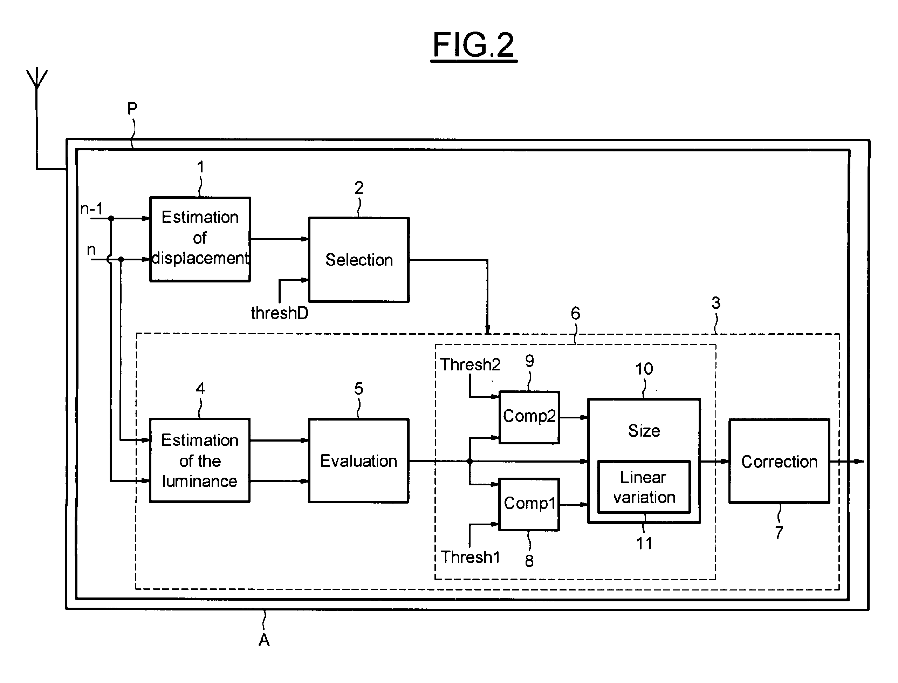

In Figure 2 is represented an apparatus A, such as a mobile telephone apparatus, comprising means P able to capture a digital photographic image and/or to record a video sequence.

The means P comprise means 1 for estimating the displacement of an image with respect to a previous image of a panoramic pan, selection means 2 able to select the target image if the estimated displacement is greater than a displacement threshold; and merging means 3.

The estimation means 1 receive as input the target image n and the last image n-1 merged with the panoramic pan, which will be named the previous image. The means 1 then estimate the displacement performed by the camera between the target image n and the previous image n-1. The estimation is carried out on the basis of a scheme known to the person skilled in the art using the luminance of the images.

Once the displacement has been estimated by the estimation means 1, it is delivered to the selection means 2. The selection means 2 then compare the estimated displacement with a displacement threshold (ThreshD). If the displacement is greater than the displacement threshold (ThreshD), the selection means deliver a control signal to the merging means 3 indicating that the target image n may be used for the panoramic pan.

On the other hand, if the estimated displacement is less than the displacement threshold (threshD), the control signal delivered by the selection means 2 indicate to the merging means 3 that the target image n need not be merged with the panoramic pan.

Thus, if the estimated displacement is greater than the threshold displacement threshold (ThreshD), the merging means 3 are actuated.

The merging means 3 comprise luminance determination means 4, evaluation means 5 able to evaluate the luminance difference between the target image n and the last image used for the panoramic pan, i.e. for example the previous image n-1, determination means 6 able to determine the size of the zone of merging of the two images as a function of the evaluated luminance difference, and correction means 7 able to correct the luminance of the pixels situated in the merging zone.

The means 4 for determining the luminance receive as input the target image n together with the last image merged with the panoramic pan, i.e. the previous image n-1 for example. The means 4 then determine the luminance of each of the two images and deliver each of the values to the evaluations means 5.

The evaluation means 5 then calculate the luminance difference appearing between the target image n and the last image merged with the panoramic pan n-1. The result of this difference is then delivered as output from the means 5 to the means 6 for estimating the size of the zone of merging of the target image n with the panoramic image.

The estimation means 6 comprise first comparison means 8, second comparison means 9, and means 10 for determining the size of the merging zone comprising means of linear variation 11.

The first comparison means 8 receive as input the difference evaluated by the means 5. The result of the difference is then compared with a first threshold (Thresh1). If the said difference is lower than the first threshold (Thresh1), the first comparison means 8 deliver as output a signal indicating that the size of the merging zone of the target image n needs to be fixed at a lower value. Otherwise, the first comparison means 8 deliver a signal indicating that the size of the output zone need not be fixed at a lower value.

The second comparison means 9 also receive as input the difference evaluated by the means 5. The result of the difference is then compared with a second threshold (Thresh2). If the said difference is higher than the second threshold (Thresh2), the first comparison means 8 then deliver as output a signal indicating that the size of the merging zone of the target image n needs to be fixed at a higher value. Otherwise, the second comparison means 9 deliver a signal indicating that the size of the output zone need not be fixed at a higher value.

The means 10 for determining the size of the merging zone receive as input the signal arising from the first comparison means 8 as well as the signal arising from the second comparison means 9.

If the means 10 receive a signal indicating that the size of the merging zone needs to be fixed at the lower value by the first comparison means 8, then the means 10 deliver as output a merging zone size corresponding to the lower value.

If the means 10 receive a signal indicating that the size of the merging zone needs to be fixed at the higher value by the second comparison means 9, then the means 10 deliver as output a merging zone size corresponding to the higher value.

The means 10 also receive as input the result of the difference evaluated by the means 5. If the means 10 do not receive any signal indicating that the size of the merging zone needs to be fixed at the lower value or at the higher value, the means 10 then deliver as output a merging zone size whose value depends on the luminance difference evaluated by the means 5. The value of the size of the merging zone is then determined by the means 11 of linear variation included in the means 10.

The means 10 therefore deliver as output the value of the size of the zone of merging of the target image n with the panoramic image to the correction means 7. The means 7 then apply a luminance correction, such as a linear correction, in the merging zone, so as to obtain a continuous progressive transition between the target image n merged with the panoramic image, and the image previously merged with the panoramic image.

Firstly, it is therefore proposed, according to the present description, to ensure good definition of the final panoramic image by selecting the following image to be merged with the panoramic image if the displacement performed between the last image merged with the panoramic image and the following image is sufficient. Secondly, it is also proposed to refine the transitions between the images so as to obtain joins that are not visible by making the size of the merging zone as a function of the luminance difference between the last image merged with the panoramic image and the following image.

## Claims

1. Method for producing a panoramic image on the basis of a video sequence, comprising a merging of a target image of a video sequence with a panoramic pan comprising images of the said video sequence, **characterized in that** it comprises:
- an evaluation (105) of the luminance difference between the target image and the last image used for the panoramic pan;
- a determination of the size of the zone of merging of the two images as a function of the evaluated luminance difference;
- a correction (111) of the luminance of the pixels situated in the merging zone.

2. Method according to Claim 1, **characterized in that** the size of the merging zone is fixed at a lower value (107) if the evaluated luminance difference is lower than a first threshold (106).

3. Method according to one of Claims 1 or 2, **characterized in that** the size of the merging zone is fixed at a higher value (109) if the evaluated luminance difference is higher than a second threshold (108).

4. Method according to one of Claims 1 to 3, **characterized in that** the size of the merging zone varies linearly (110) with the evaluated luminance difference if the evaluated luminance difference lies between the first and the second threshold.

5. Method according to one of Claims 1 to 4, **characterized in that** it comprises an estimation (101) of the displacement between the target image and the last image used for the panoramic pan, and a selection of the target image if the estimated displacement is greater than a displacement threshold.

6. Apparatus furnished with digital picture-taking means comprising means for merging a target image of a video sequence with a panoramic pan comprising images of the said video sequence, **characterized in that** the merging means comprise:
- evaluation means able to evaluate the luminance difference between the target image and the last image used for the panoramic pan;
- determination means able to determine the size of the zone of merging of the two images as a function of the evaluated luminance difference;
- correction means able to correct the luminance of the pixels situated in the merging zone.

7. Apparatus according to Claim 6, **characterized in that** the determination means comprise first comparison means able to compare the evaluated luminance difference with a first threshold.

8. Apparatus according to one of Claims 6 or 7, **characterized in that** the determination means comprise second comparison means able to compare the evaluated luminance difference with a second threshold.

9. Apparatus according to one of Claims 6 to 8, **characterized in that** the determination means comprise means of linear variation able to make the size of the merging zone vary linearly with the evaluated luminance difference if the evaluated luminance difference lies between the first and the second thresholds.

10. Apparatus according to one of Claims 6 to 9, **characterized in that** it comprises means for estimating the displacement able to estimate the displacement between the target image and the last image used for the panoramic pan, and selection means able to select the target image if the estimated displacement is greater than a displacement threshold.

## Patentansprüche

1. Verfahren zum Erzeugen eines Panoramabildes auf der Basis einer Videosequenz, umfassend ein Vereinigen eines Zielbilds einer Videosequenz mit einem Panoramaschwenk umfassend Bilder der Videosequenz, **dadurch gekennzeichnet, dass** es Folgendes umfasst:
- eine Evaluation (105) der Luminanzdifferenz zwischen dem Zielbild und dem letzten, für den Panoramaschwenk verwendeten Bild;
- eine Bestimmung der Größe der Zone der Vereinigung der beiden Bilder als Funktion der evaluierten Luminanzdifferenz;
- eine Korrektur (111) der Luminanz der in der Vereinigungszone befindlichen Pixel.

2. Verfahren nach Anspruch 1, **dadurch gekennzeichnet, dass** die Größe der Vereinigungszone auf einen unteren Wert (107) fixiert wird, falls die evaluierte Luminanzdifferenz unter einem ersten Schwellwert (106) liegt.

3. Verfahren nach einem der Ansprüche 1 oder 2, **dadurch gekennzeichnet, dass** die Größe der Vereinigungszone auf einen höheren Wert (109) fixiert wird, falls die evaluierte Luminanzdifferenz höher ist als ein zweiter Schwellwert (108).

4. Verfahren nach einem der Ansprüche 1 bis 3, **dadurch gekennzeichnet, dass** die Größe der Vereinigungszone linear (110) mit der evaluierten Luminanzdifferenz variiert, falls die evaluierte Luminanzdifferenz zwischen dem ersten und dem zweiten Schwellwert liegt.

5. Verfahren nach einem der Ansprüche 1 bis 4, **dadurch gekennzeichnet, dass** es eine Schätzung (101) der Verschiebung zwischen dem Zielbild und dem letzten, für den Panoramaschwenk verwendeten Bild und eine Wahl des Zielbilds umfasst, falls die geschätzte Verschiebung größer ist als ein Verschiebungsschwellwert.

6. Vorrichtung, die mit digitalen Bildaufnahmemitteln ausgestattet ist, umfassend Mittel zum Vereinigen eines Zielbilds einer Videosequenz mit einem Panoramaschwenk, der Bilder der Videosequenz umfasst, **dadurch gekennzeichnet, dass** die Vereinigungsmittel Folgendes umfassen:
- Evaluationsmittel, die in der Lage sind, die Luminanzdifferenz zwischen dem Zielbild und dem letzten, für den Panoramaschwenk verwendeten Bild zu evaluieren;
- Bestimmungsmittel, die in der Lage sind, die Größe der Zone der Vereinigung der beiden Bilder als Funktion der evaluierten Luminanzdifferenz zu bestimmen;
- Korrekturmittel, die in der Lage sind, die Luminanz der in der Vereinigungszone befindlichen Pixel zu korrigieren.

7. Vorrichtung nach Anspruch 6, **dadurch gekennzeichnet, dass** die Bestimmungsmittel erste Vergleichsmittel umfassen, die in der Lage sind, die evaluierte Luminanzdifferenz mit einem ersten Schwellwert zu vergleichen.

8. Vorrichtung nach einem der Ansprüche 6 oder 7, **dadurch gekennzeichnet, dass** die Bestimmungsmittel zweite Vergleichsmittel umfassen, die in der Lage sind, die evaluierte Luminanzdifferenz mit einem zweiten Schwellwert zu vergleichen.

9. Vorrichtung nach einem der Ansprüche 6 bis 8, **dadurch gekennzeichnet, dass** die Bestimmungsmittel Mittel zur linearen Variation umfassen, die in der Lage sind zu bewirken, dass die Größe der Vereinigungszone linear mit der evaluierten Luminanzdifferenz variiert, falls die evaluierte Luminanzdifferenz zwischen dem ersten und dem zweiten Schwellwert liegt.

10. Vorrichtung nach einem der Ansprüche 6 bis 9, **dadurch gekennzeichnet, dass** sie Mittel zum Schätzen der Verschiebung', die in der Lage sind, die Verschiebung zwischen dem Zielbild und dem letzten, für den Panoramaschwenk verwendeten Bild zu schätzen, und Wahlmittel, die in der Lage sind, das Zielbild zu wählen, falls die geschätzte Verschiebung größer ist als ein Verschiebungsschwellwert, umfasst.

## Revendications

1. Procédé de réalisation d'une image panoramique à partir d'une séquence vidéo, comprenant une fusion d'une image cible d'une séquence vidéo à un panoramique comportant des images de ladite séquence vidéo, **caractérisé en ce qu'**il comprend :
- une évaluation (105) de la différence de luminance entre l'image cible et la dernière image utilisée pour le panoramique ;
- une détermination de la taille de la zone de fusion des deux images en fonction de la différence de luminance évaluée ;
- une correction (111) de la luminance des pixels situés dans la zone de fusion.

2. Procédé selon la revendication 1, **caractérisé en ce que** la taille de la zone de fusion est fixée à une valeur inférieure (107) si la différence de luminance évaluée est inférieure à un premier seuil (106).

3. Procédé selon l'une des revendications 1 ou 2, **caractérisé en ce que** la taille de la zone de fusion est fixée à une valeur supérieure (109) si la différence de luminance évaluée est supérieure à un second seuil (108).

4. Procédé selon l'une des revendications 1 à 3, **caractérisé en ce que** la taille de la zone de fusion varie linéairement (110) avec la différence de luminance évaluée si la différence de luminance évaluée est comprise entre le premier et le second seuil.

5. Procédé selon l'une des revendications 1 à 4, **caractérisé en ce qu'**il comprend une estimation(101) du déplacement entre l'image cible et la dernière image utilisée pour le panoramique, et une sélection de l'image cible si le déplacement estimé est supérieur à un seuil de déplacement.

6. Appareil muni de moyens de prises de vues numérique comprenant des moyens de fusion d'une image cible d'une séquence vidéo à un panoramique comprenant des images de ladite séquence vidéo, **caractérisé en ce que** les moyens de fusion comprennent :
- des moyens d'évaluation aptes à évaluer la différence de luminance entre l'image cible et la dernière image utilisée pour le panoramique ;
- des moyens de détermination aptes à déterminer la taille de la zone de fusion des deux images en fonction de la différence de luminance évaluée ;
- des moyens de correction aptes à corriger la luminance des pixels situés dans la zone de fusion.

7. Appareil selon la revendication 6, **caractérisé en ce que** les moyens de détermination comprennent des premiers moyens de comparaison aptes à comparer la différence de luminance évaluée à un premier seuil.

8. Appareil selon l'une des revendications 6 ou 7, **caractérisé en ce que** les moyens de détermination comprennent des seconds moyens de comparaison aptes à comparer la différence de luminance évaluée à un second seuil.

9. Appareil selon l'une des revendications 6 à 8, **caractérisé en ce que** les moyens de détermination comprennent des moyens de variation linéaire aptes à faire varier la taille de la zone de fusion linéairement avec la différence de luminance évaluée si la différence de luminance évaluée est comprise entre le premier et le second seuils.

10. Appareil selon l'une des revendications 6 à 9, **caractérisé en ce qu'**il comprend des moyens d'estimation du déplacement aptes à estimer le déplacement entre l'image cible et la dernière image utilisée pour le panoramique, et des moyens de sélection aptes à sélectionner l'image cible si le déplacement estimé est supérieur à un seuil de déplacement.
